# EUROPEAN PATENT SPECIFICATION

(11) **EP 1 045 307 B1**
(45) Date of publication and mention of the grant of the patent: **12.07.2006**
(21) Application number: 00106930.1
(22) Date of filing: 31.03.2000
(51) Int. Cl.: G06F 12/08

(54) **Dynamic reconfiguration of a micro-controller cache memory**
Dynamische Rekonfiguration des Cache-Speichers eines Mikrokontrollers
Reconfiguration dynamique de l'antémémoire d'un micro-contrôleur

(30) Priority: 16.04.1999 US 293278
(43) Date of publication of application: 18.10.2000
(73) Proprietor: Infineon Technologies North America Corp., San Jose, CA 95112-6000 (US)
(72) Inventor: Gautho, Manuel O., San Jose, CA 95126 (US); Afsar, Muhammad, San Diego, CA 92129 (US)
(74) Representative: Patentanwälte Westphal, Mussgnug & Partner

(56) References cited:
- GB-A- 2 284 911
- US-A- 3 742 458
- US-A- 4 580 240

## Description

### FIELD OF THE INVENTION:

The present invention pertains to computing systems. More specifically, the present invention relates to dynamically reconfiguring the cache memory of micro-controllers, and the like.

### BACKGROUND OF THE INVENTION:

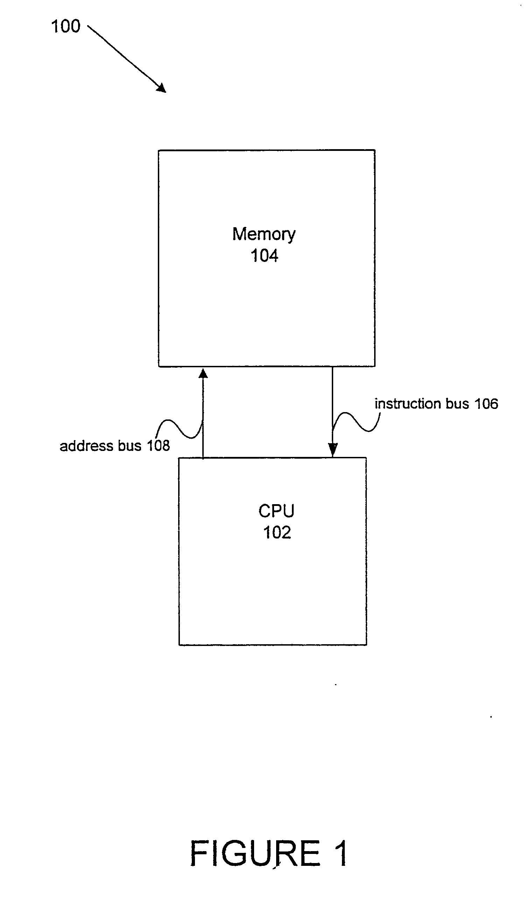

Figure 1 shows a conventional computer system 100. The computer system 100 includes a central processing unit 102, or CPU, that operates in accordance with a pre-determined program or set of instructions stored within an associated program memory 104. Typically, instruction processing generally includes fetching and decoding the instruction, executing the instruction, and storing the execution result in the destination identified by the instruction. More specifically, during what is referred to as a fetch stage, an instruction is fetched by the CPU 102 from the memory 104 by way of an instruction data bus 106. The CPU 102 then executes the fetched instruction.

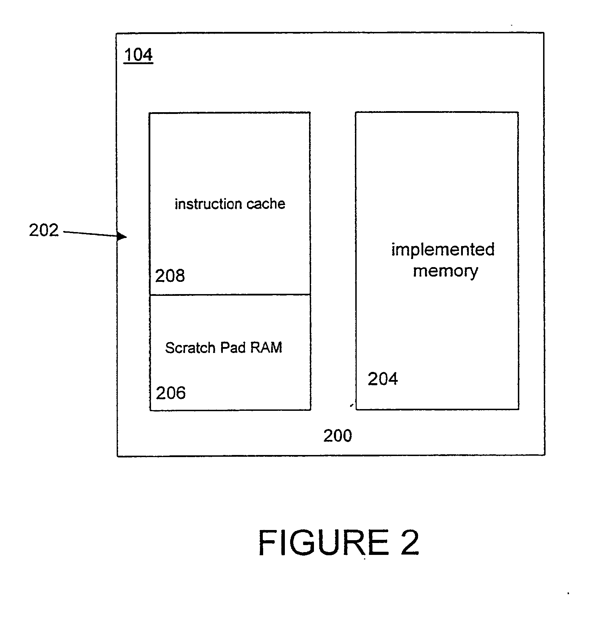

Figure 2 illustrates an organization of the memory 104 shown in Figure 1. The memory 104 includes a cache memory 202 and an implemented memory 204. The cache memory 202 is typically divided into a scratch pad RAM (SPR) 206 and an instruction cache portion 208. In conventional program memory architectures, the SPR 206 and the instruction cache 208 are generally a fixed type architecture in that the relative sizes of the SPR 206 and the instruction cache 208 remain constant regardless of the application being executed by the CPU 102.

Applications typically have very different requirements, and for some, the benefit of a large instruction cache 208 will outweigh the need for a deterministic execution time provided by the SPR 206. Unfortunately, conventional \ memory subsystems allocate fixed portions of the available memory to the instruction cache 208 and the SPR 206 regardless of the particular requirements of the application being processed by the CPU 102.

This typically results in less than optimal performance since in some instances the amount of scratchpad memory is not sufficient to accommodate those routines included in an application for which the scratchpad memory is required.

In the past, a number of approaches have been performed for solving the problem mentioned above. For example, GB 2284911 discloses a flexible lock-down cache memory arrangement in which any required number of storage locations in a cache memory may be marked as "locked-down" for use as static random access memory for critical program elements, such as interrupt routines, which require the fastest possible access.

According to this document the described system allows precisely to allocate the cache/SRAM split according the current system requirements.

Furthermore, US 3,742,458 discloses a method and an apparatus for flexible protection against overwriting and destruction of the contents of selected portions of a computer memory device formed of a multiplicity of memory units.

In view of the foregoing, it should be apparent that the capability of dynamically configuring the memory used to store instructions and data used by a micro-controller is desirable.

### SUMMARY OF THE INVENTION

According to one aspect of the invention, a method for executing a computer program having configuration data using a CPU with a main memory and an associated cache memory is disclosed. In one embodiment of the invention, the computer program and the configuration data are loaded into the main memory. Using the configuration data, a portion of the cache memory is configured as one of a plurality of cache memory types whereby each of the plurality of cache memory types is associated with a corresponding index. The computer program is then executed by fetching instructions from the configured cache memory and the main memory.

In a preferred embodiment, the configured portion of the cache memory is a scratch RAM type memory.

In another aspect of the invention, a method for dynamically configuring a cache memory is disclosed. The cache memory includes a plurality of cache lines formed of a plurality of contiguous bytes. In one embodiment, a first one of the contiguous bytes resides at a cache line memory address whereas the remaining bits of the cache line memory address form a cache line tag that is used to refer to the entire cache line. The cache memory also includes a programmable cache memory address decoder arranged to form an index used to select a particular row within the cache memory. The index is based upon a selected number of bits from the cache line memory address. The method is implemented by providing configuration data associated with a particular cache memory type to the programmable cache memory address decoder and programming the cache memory address decoder based upon the configuration data to recognize a range of indexes as the particular cache memory type.

In yet another aspect of the invention, a computer system is disclosed. The computer system includes a main memory for storing a plurality of computer program instructions having associated configuration data. A central processing unit (CPU) for executing the computer program instructions, and a cache memory for storing selected ones of the computer program instructions for access by the CPU. The computer system also includes configuration circuitry for configuring a portion of the cache memory as one of a plurality of cache memory types according to the configuration data.

In still another aspect of the invention, a computer program product is disclosed. The computer program product includes a computer readable medium, and computer program instructions embedded in the computer readable medium. The computer program product also includes configuration data associated with the computer program instructions that is embedded in the computer readable medium. The configuration data being used to configure a portion of a cache memory as one of a plurality of cache memory types for facilitating execution of the computer program instructions by a computer.

### BRIEF DESCRIPTION OF THE DRAWINGS

The present invention is illustrated by way of example, and not by way of limitation, in the figures of the accompanying drawings and in which like reference numerals refer to similar elements and in which:
Figure 1 illustrates a conventional computing system;
Figure 2 illustrates the organization of the program memory shown in Figure 1;
Figure 3 illustrates a computing system in accordance with an embodiment of the invention;
Figure 4 illustrates a CPU bus interface in accordance with an embodiment of the invention; and
Figure 5 is a flowchart detailing a process for dynamically reconfiguring a cache memory in accordance with an embodiment of the invention.

### DETAILED DESCRIPTION OF THE PREFERRED EMBODIMENTS

In the following detailed description of the present invention, numerous specific embodiments are set forth in order to provide a thorough understanding of the invention. However, as will be apparent to those skilled in the art, the present invention may be practiced without these specific details or by using alternate elements or processes. In other instances well known processes, procedures, components, and circuits have not been described in detail so as not to unnecessarily obscure aspects of the present invention.

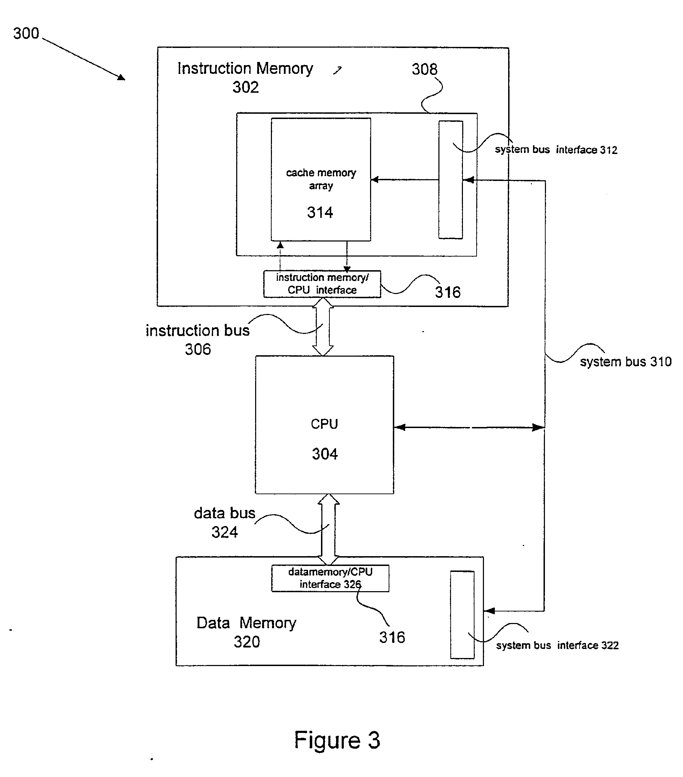

Referring initially to Figure 3, an illustration of a computing system 300 in accordance with an embodiment of the invention is shown. The computing system 300 includes an instruction memory 302 connected to a processing unit 304 by way of an instruction bus 306. In the described embodiment, the instruction bus 306 is arranged to carry program data from the instruction memory 302 and corresponding to instruction addresses provided by the processing unit 304. It should be noted that for the following discussion the processing unit 304 is a dedicated central processing unit, or CPU, found in most computing systems. However, other type processing units capable of performing executable instructions are also contemplated. Such other type processing units include re-configurable devices such as for example, programmable logic devices, or PLDs, field programmable logic devices, or FPLD, found in, for example, reconfigurable computer systems.

In the described embodiment, the instruction memory 302 is arranged to store executable program instructions associated with an application, or computer program, that are fetched and subsequently executed by the CPU 304. The instruction memory 302 also includes a configurable cache memory 308. The configurable cache memory 308 is arranged to use configuration data provided by the CPU 304 to allocate certain of its constituent memory locations that are used for storing selected ones of the executable instructions that form the program being performed by the CPU 304. In one implementation, a scratch pad RAM (SPR) type memory is desirable when storing those instructions which require a deterministic fetching time. In other words, the elapsed time between the signaling by the CPU 304 that an instruction is to be fetched from the memory 308 and the time it is available to the CPU 304 must be constant throughout the execution of the program. Since this constancy of memory access time can not be guaranteed in a conventionally architectured cache memory with dynamic allocation of cache lines, the static allocation of a range of memory addresses within the memory 308 as the SPR type memory is a very desirable attribute of the invention. Even more so, is the capability of dynamically re-configuring the memory 308 based upon the requirements of the particular program being performed by the CPU 304.

In one embodiment of the invention, a system bus 310 connects the CPU 304 to a system bus interface 312 included in the memory 308. The system bus interface 312 is also connected to a cache memory array 314 also included in the configurable cache memory 308. In one embodiment, the system bus interface 312 uses the configuration data to configure the cache memory array 314 into appropriate cache memory types. The instruction memory 302 and the configurable cache memory 308 are connected to the instruction bus 306 by way of a program memory/CPU interface 316.

In the described embodiment, the CPU 304 is also connected to a data memory 320 by way of the system bus 310. The system bus 310 is, in turn, connected to a system bus interface 322 included in the data memory 320. In the described embodiment, a data bus 324 connecting the CPU 304 to a data memory/CPU interface 326 included in the data memory 320 is arranged to carry data from the CPU 304.

In one embodiment of the invention, the configurable cache memory array 314 stores instructions from the instruction memory 302 in what is referred to as cache lines. A cache line is formed of a plurality of contiguous bytes that are typically aligned such that the first of the contiguous bytes resides at an address having a certain number of low order bits set to zero. The certain number of low order bits is sufficient to uniquely identify each byte in the cache line. The remaining bits of the address form a tag that is used to refer to the entire cache line.

Cache memories are typically organized into an associative structure (also referred to as "set associative"). In an associative structure, the cache lines are accessed as a two dimensional array having rows and columns. When a cache memory is searched for bytes residing at an address, a number of bits from the address are used as an index into the cache. The index selects a particular row within the two dimensional array, and therefore, the number of address bits required for the index is determined by the number of rows configured into the cache. The act of selecting a row via an index is referred to as "indexing". The addresses associated with bytes stored in the multiple cache lines of a row are examined to determine if any of the addresses stored in the row match the requested address. If a match is found, the access is said to be a "hit" and the cache provides the associated bytes. If, however, a miss is detected, the bytes are transferred from the instruction memory 302 into the cache memory 308. It should be noted that the bytes could also come from a system bus if a cacheable memory is coupled to the bus as shown in Figure 3.

During operation, computer program instructions and associated configuration data are stored in the instruction memory 302. Prior to execution of the computer program instructions, the configuration data is retrieved by the CPU 304 and conveyed by way of the CPU bus 310 to the CPU bus interface 312. The CPU bus interface 312 uses the configuration data to configure the cache memory array 314 into appropriate cache memory types. In one embodiment of the invention, the configuring includes allocating certain of the cache memory address space represented by, for example, a range of cache memory addresses, to particular cache memory types. By way of example, a range of cache memory addresses from {0100} to {0400} would represent an SPR cache memory type region in which those computer program instructions requiring a deterministic fetch time would be stored. In this way, each cache memory type has associated with it a corresponding index that is used to select those rows located within the appropriate cache memory type region.

Subsequent address requests from, for example the CPU 304 in the form of a CPU memory request, are decoded and compared to the allocated range of memory addresses which delineate the configured cache memory array 314. When the CPU memory request, for example, is found to be located within this range, the corresponding memory location within the cache memory type is made accessible to the requesting device.

By using the configurable cache memory array 314 in conjunction with the configuration data, instructions requiring, for example, a deterministic fetching and execution time can be stored in, for example, a dynamically allocated SPR type memory portion of the cache memory array 314. By way of example, if the cache memory array 314 has a total memory storage capability of 2K (2048) bytes arranged in appropriate columns and rows, 1 K bytes can be apportioned as SPR type memory as determined by the CPU 304 based upon the application being processed. In this case, any instruction stored in the SPR region (as determined by the allocated memory addresses associated with the SPR memory region) of the cache memory array 314 will have a deterministic fetch time. On the other hand, if the cache memory array 314 is configured to have no SPR memory region, then the entire 2K bytes are treated as a conventional cache memory. Conversely, the cache memory array 314 can use the configuration data can be used to apportion the entire cache memory array 314 (2K bytes) or any portion thereof as SPR memory.

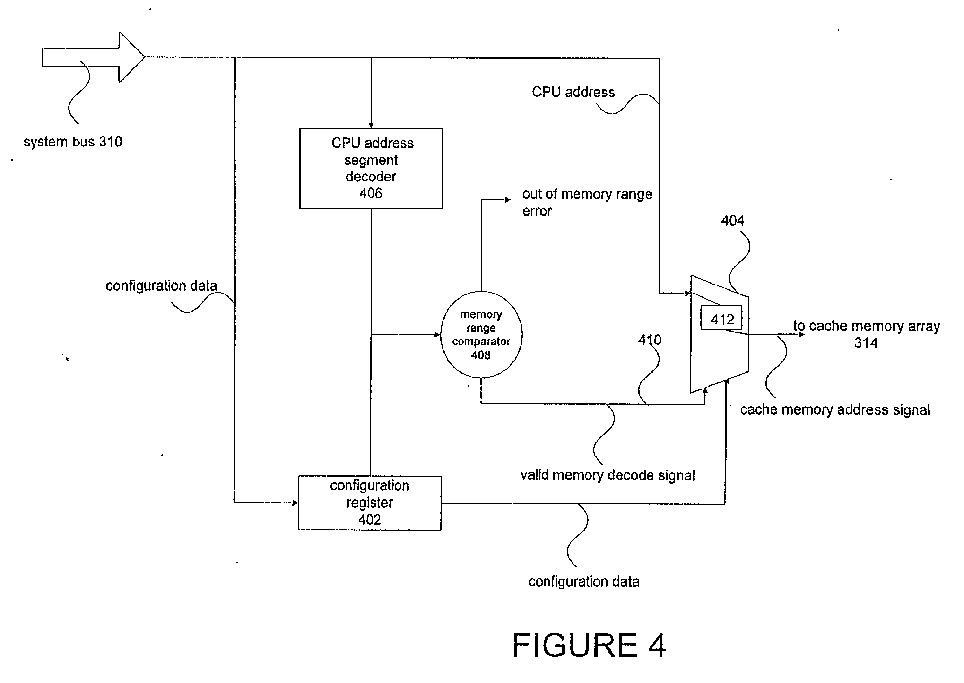

Referring now to Figure 4, a CPU bus interface 400 in accordance with an embodiment of the invention is shown. It should be noted that the CPU bus interface 400 is one embodiment of the CPU bus interface 312 shown in Figure 3. In one embodiment of the invention, the CPU bus interface 400 couples the CPU bus 310 to the cache memory array 314. During the initial configuration of the cache memory array 314, the CPU bus 310 provides configuration data to a configuration data register 402. The configuration data is then made available to a programmable cache address decoder 404. The programmable cache address decoder 404 is, in turn, arranged to provide a cache memory address access signal based upon a CPU address generated by the CPU 304 and the configuration data. In one embodiment of the invention, the CPU bus interface 400 includes a CPU address segment decoder 406 connected to the CPU bus 310 and the programmable cache address decoder 404. The CPU address segment decoder 402 is also connected to a cache memory range comparator 408. In the described embodiment, the cache memory range comparator 408 is used to determine if a memory address request received by the CPU interface 400 is located within the appropriate region of the memory space of the cache memory array 314 allocated to a particular cache memory type. In the case where the received memory address request is within the appropriate cache memory space, the memory range comparator 408 provides a valid memory decode signal to the programmable cache memory decoder 404 by way of an input line 410. In the case, however, where the received memory address request is not within the range of cache memory addresses allocated to the particular cache memory type, in one embodiment, an error message is generated.

It should be noted that in one embodiment, the programmable cache memory address decoder 404 includes a selector 412 connected to the CPU bus 310 arranged to receive the memory address request and generate an appropriate index corresponding to the particular cache memory type. In the described embodiment, the selector 412 uses configuration data stored in the configuration data register 402 and the valid memory range signal to generate the index. By way of example, if a selected range of cache memory addresses of the cache memory array 314 have been allocated to the particular cache memory type cache memory array 314, the selector 314 will provide the appropriate index for those instructions stored therein.

During a fetch operation, the CPU bus 310 conveys a memory request generated by the CPU 304 to the CPU bus interface 400. The CPU bus interface 400 uses the configuration data associated with the memory location requested by the received CPU memory request to ascertain if the memory location corresponding to the received CPU memory request is located within the range of memory addresses allocated for particular cache memory type. If it is found to be within the proper range of memory addresses, an appropriate cache memory address request signal is generated by the programmable cache memory address decoder 404.

Using the example from above of the 4 GB memory, the corresponding CPU memory request is a 32-bit data word. In this example, the 4 most significant bits (MSB) would be used to indicate if the associated CPU memory request is located within the appropriate one of sixteen memory segments corresponding to the SPR segment. If the memory range comparator unit 408 determines that the CPU memory request is not within the range of memory addresses allocated to an SPR memory, for example, then an appropriate error signal is generated. In that case, the CPU bus interface 400 can pass control back to the CPU 304 for further instructions or execution can proceed, for example, by fetching the required instruction from the appropriate memory segment indicated by the CPU memory request segment.

When the memory range comparator 408 determines that the received CPU memory request is located within the appropriate memory space allocated for the SPR memory, a valid memory address decode signal is generated.

Assuming for this example only that the cache memory 308 is a 2 way set associative cache memory having 1K bytes of memory arranged as 32 cache lines of 256 bits per cache line where each cache line includes 4 data words of 64 bits each. In this arrangement, one half of the cache memory (i.e., 16 cache lines) are allocated for SPR type memory. In this case, the cache memory address signal used to access a particular memory location in the cache memory array 314 includes at least a 4-bit index used to point to a particular cache line. The cache memory address signal also includes an access bit used to identify the portion of the cache memory 308 (i.e.; either the SPR type memory or the conventional cache memory) in which the indexed cache line resides.

By way of example, for the 1 K cache memory divided into 32 cache lines, the corresponding cache memory address would be a 5 bit data word having the {MSB}th as the access bit and the {MSB-1 ... MSB-4}th bits as the cache line index. In this case, the programmable cache memory decoder 404 would be configured by the configuration data to recognize a MSB = 1 to indicate, for example, that the cache line associated with the remaining {MSB-1 ... MSB-4} bits as residing in the conventional cache memory region of the cache memory 308. Alternatively, a MSB = 0 would indicate that the cache line would reside in the SPR type memory region of the cache memory 314.

In other words, with a 1 K bytes 2 way set associative cache system, with each cache line made of 256 bits, the cache system is arranged as 256 (bits/line) x 32 (lines) for a total of 1K bytes. These 32 lines are equally divided into 2 sets (16 lines each). In order to address a cache line, 4 bits are required to address a particular line in a set and an extra bit to choose between sets.

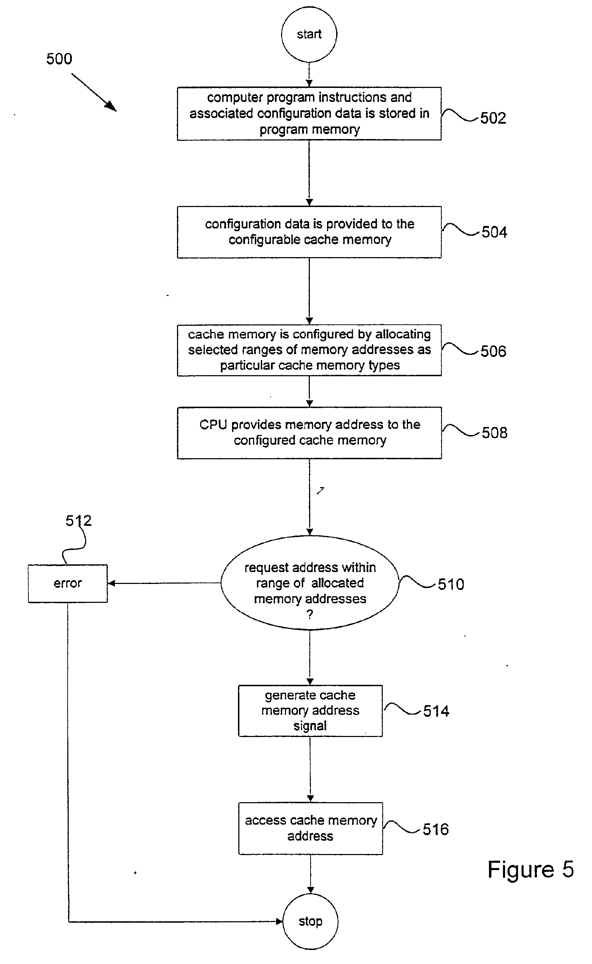

Figure 5 is a possible process 500 for executing a program using a dynamically reconfigurable cache memory in accordance with an embodiment of the invention. The process 500 will be discussed with reference to Figures 3 and 4. The computer program instructions and associated configuration data used to configure the cache memory are stored in a program memory (502). The configuration data is then provided to the configurable cache memory (504). The configurable cache memory then designates selected ranges of memory locations as particular cache memory types based upon the configuration data (506). Next, a memory request corresponding to the memory location at which the instruction to be fetched is stored, is generated in furtherance of the program execution (508). Next, it is determined if the memory request is located within the memory space allocated by the configuration data to be within the particular cache memory type (510). If it is determined that the received CPU memory request is not within the particular memory space, an error signal is generated (512). Otherwise, the appropriate cache memory address is generated (514) based upon the received CPU memory request and the configuration data and passed to a programmable address decoder. The programmable address decoder then accesses the appropriate memory location within the configurable cache memory (516) at which the instruction to be fetched is stored.

Although only a few embodiments of the present invention have been described in detail, it should be understood that the present invention can be embodied in many other specific forms without departing from the scope of the invention as claimed. Particularly, although the invention has been described primarily in the context of computer systems having processor and memory subsystems, the advantages including improved CPU performance due to the ability to dynamically reconfigure the instruction cache can be applied to any system where dynamically configurable memory is desirous. Such systems include reconfigurable computing systems having no CPU but configurable logic devices (such as PLDs) that act as on the fly controllers.

Additionally, the characteristics of the invention can be varied in accordance with the needs of a particular system. Therefore, the present examples are to be considered as illustrative and not restrictive, and the invention is not to be limited to the details given herein, but may be modified within the scope of the appended claims.

## Claims

1. A method for executing a computer program using a CPU (304) having a main memory and a cache memory associated therewith, the computer program having configuration data associated therewith, such method comprising:
loading the computer program into the main memory (302);
configuring a portion of the cache memory (314) as one of a plurality of cache memory types in accordance with the configuration data associated with the computer program; and
fetching instructions from the cache memory (314) and the main memory for execution of the computer program,
**characterized in that** each of the plurality of cache memory types is associated with a corresponding index.

2. A method as recited in claim 1, wherein the configuring comprises:
programming a programmable cache memory address decoder (404) connected to the cache memory (314) based upon the configuration data to recognize a range of memory addresses in the cache memory (314) as being a particular cache memory type and storing the configuration data in a configuration register (402) that is connected to the programmable cache memory address decoder (404).

3. A method as recited in claim 2, wherein the fetching comprises:
decoding a segment of a received memory address request by an address segment decoder (406), wherein the memory address request identifies the memory address in the cache memory (314) associated with the instruction to be fetched; and
storing configuration data associated with the received memory address request in a configuration register (402) that is connected to the programmable cache memory address decoder (404); and
determining by a memory range comparator (408) connected to the configuration register (402) and the segment decoder (406) if the received memory address request is located within the range of memory locations recognized as being the particular cache memory type.

4. A method as recited in claim 3, wherein the determining is based upon the configuration data and the decoded memory address request segment.

5. The method as recited in claim 4, wherein the determining further comprises:
generating a valid decode signal by the memory range comparator (408) when the received address is determined to be located within the range of memory addresses recognized as being the particular cache memory type, wherein the valid decode signal is used by the programmable decoder (404) in decoding the received memory address request.

6. A method as recited in claim 5, wherein the fetching comprises:
decoding the received memory address request by the programmable cache memory address decoder (404) using the valid decode signal and the configuration data to form a corresponding cache memory address request; and
accessing the location in the cache memory (314) corresponding to the decoded received memory address request at which the instruction to be fetched is stored.

7. The method as recited in claim 6, wherein the particular cache memory type is a scratch pad RAM.

## Patentansprüche

1. Verfahren zum Ausführen eines Computerprogramms unter Verwendung einer CPU (304) mit einem Hauptspeicher und einem diesem zugeordneten Cache-Speicher, wobei mit dem Computerprogramm Konfigurationsdaten assoziiert sind, mit den folgenden Schritten:
Laden des Computerprogramms in den Hauptspeicher (302); Konfigurieren eines Teils des Cache-Speichers (314) als einen von mehreren Cache-Speichertypen gemäß den mit dem Computerprogramm assoziierten Konfigurationsdaten; und
Abrufen von Anweisungen aus dem Cache-Speicher (314) und dem Hauptspeicher zur Ausführung des Computerprogramms, **dadurch gekennzeichnet, daß** jeder der mehreren Cache-Speichertypen mit einem entsprechenden Index assoziiert ist.

2. Verfahren nach Anspruch 1, wobei das Konfigurieren die folgenden Schritte umfaßt:
Programmieren eines programmierbaren Cache-Speicheradressendecoders (404), der mit dem Cache-Speicher (314) verbunden ist, auf der Basis der Konfigurationsdaten, um einen Bereich von Speicheradressen in dem Cache-Speicher (314) als einen bestimmten Cache-Speichertyp zu erkennen, und Speichern der Konfigurationsdaten in einem Konfigurationsregister (402), das mit dem programmierbaren Cache-Speicheradressendecoder (404) verbunden ist.

3. Verfahren nach Anspruch 2, wobei das Abrufen die folgenden Schritte umfaßt:
Decodieren eines Segments einer empfangenen Speicheradressenanforderung durch einen Adressensegmentdecoder (406), wobei die Speicheradressenanforderung die Speicheradresse in dem Cache-Speicher (314) identifiziert, die mit der abzurufenden Anweisung assoziiert ist; und
Speichern von mit der empfangenen Speicheradressenanforderung assoziierten Konfigurationsdaten in einem Konfigurationsregister (402), das mit dem programmierbaren Cache-Speicheradressendecoder (404) verbunden ist; und
Bestimmen, ob sich die empfangene Speicheradressenanforderung in dem Bereich von Speicherstellen befindet, der als der bestimmte Cache-Speichertyp erkannt wird, durch einen Speicherbereichskomparator (408), der mit dem Konfigurationsregister (402) und dem Segmentdecoder (406) verbunden ist.

4. Verfahren nach Anspruch 3, wobei das Bestimmen auf den Konfigurationsdaten und dem decodierten Speicheradressenanforderungssegment basiert.

5. Verfahren nach Anspruch 4, wobei das Bestimmen ferner die folgenden Schritte umfaßt:
Erzeugen eines Gültige-Decodierung-Signals durch den Speicherbereichskomparator (408), wenn bestimmt wird, daß sich die empfangene Adresse in dem Bereich von Speicheradressen befindet, der als der bestimmte Cache-Speichertyp erkannt wird, wobei der programmierbare Decoder (404) das Gültige-Decodierung-Signal beim Decodieren der empfangenen Speicheradressenanforderung benutzt.

6. Verfahren nach Anspruch 5, wobei das Abrufen die folgenden Schritte umfaßt:
Decodieren der empfangenen Speicheradressenanforderung durch den programmierbaren Cache-Speicheradressendecoder (404) unter Verwendung des Gültige-Decodierung-Signals und der Konfigurationsdaten, um eine entsprechende Cache-Speicheradressenanforderung zu bilden; und
Zugreifen auf die der decodierten empfangenen Speicheradressenanforderung entsprechenden Stelle in dem Cache-Speicher (314), an der die abzurufende Anweisung gespeichert ist.

7. Verfahren nach Anspruch 6, wobei der bestimmte Cache-Speichertyp ein Scratchpad-RAM ist.

## Revendications

1. Procédé permettant d'exécuter un programme informatique à l'aide d'une unité centrale (304), comprenant une mémoire principale et une mémoire cache associée à celle-ci, des données de configurations étant associées au programme informatique, un tel procédé comprenant :
- le chargement du programme informatique dans la mémoire principale (302) ;
- la configuration d'une partie de la mémoire cache (314) en tant que l'un d'une pluralité de types de mémoire cache, conformément aux données de configuration associées au programme informatique ; et
- l'extraction d'instructions à partir de la mémoire cache (314) et de la mémoire principale pour l'exécution du programme informatique,
**caractérisé en ce que**
chacun de la pluralité de types de mémoire cache est associé à un indice correspondant.

2. Procédé selon la revendication 1,
selon lequel la configuration comprend :
- la programmation d'un décodeur d'adresse de mémoire cache programmable (404) connecté à la mémoire cache (314) en fonction des données de configuration, afin de reconnaître une série d'adresses de mémoire dans la mémoire cache (314) comme étant d'un type de mémoire cache particulier, et
- le stockage des données de configuration dans un registre de configuration (402) connecté au décodeur d'adresse de mémoire cache programmable (404).

3. Procédé selon la revendication 2,
selon lequel l'extraction comprend :
- le décodage d'un segment d'une requête d'adresse de mémoire reçue par un décodeur de segment d'adresse (406), la requête d'adresse de mémoire identifiant l'adresse de mémoire dans la mémoire cache (314) associée à l'instruction à extraire ;
- le stockage de données de configuration associées à la requête d'adresse de mémoire reçue dans un registre de configuration (402) connecté au décodeur d'adresse de mémoire cache programmable (404) ; et
- la détermination, par un comparateur de séries de mémoire (408) connecté au registre de configuration (402) et au décodeur de segment (406), du fait que la requête d'adresse de mémoire reçue est ou non située au sein de la série d'emplacements de mémoire reconnus comme étant du type de mémoire cache particulier.

4. Procédé selon la revendication 3,
selon lequel la détermination est basée sur les données de configuration et le segment de requête d'adresse de mémoire est décodé.

5. Procédé selon la revendication 4,
selon lequel la détermination comprend en outre :
la génération d'un signal de décodage valide par le comparateur de séries de mémoire (408) lorsque l'adresse reçue est déterminée comme étant située dans la série d'adresses de mémoire reconnues comme étant du type de mémoire cache particulier, le signal de décodage valide étant utilisé par le décodeur programmable (404) lors du décodage de la requête d'adresse de mémoire reçue.

6. Procédé selon la revendication 5,
selon lequel l'extraction comprend en outre :
- le décodage de la requête d'adresse de mémoire reçue par le décodeur d'adresse de mémoire cache programmable (404) à l'aide du signal de décodage valide et des données de configuration, afin de former une requête d'adresse de mémoire cache correspondante ; et
- l'accès à l'emplacement, dans la mémoire cache (314) correspondant à la requête d'adresse de mémoire reçue décodée, au niveau duquel est stockée l'instruction à extraire.

7. Procédé selon la revendication 6,
selon lequel comme type de mémoire cache particulier on utilise une mémoire vive bloc-notes.
